# EUROPEAN PATENT SPECIFICATION

(11) **EP 3 543 141 B1**
(45) Date of publication and mention of the grant of the patent: **20.01.2021**
(21) Application number: 19163381.7
(22) Date of filing: 18.03.2019
(51) Int. Cl.: B64D 37/32, B64D 13/06, A62C 3/08, A62C 99/00

(54) **COOLED AIR SOURCE FOR A CATALYTIC INERTING CONDENSER**
QUELLE FÜR GEKÜHLTE LUFT FÜR EINEN KATALYTISCHEN INERTISIERUNGSKONDENSATOR
SOURCE D'AIR REFROIDI POUR UN CONDENSEUR D'INERTAGE CATALYTIQUE

(30) Priority: 19.03.2018 US 201815924509
(43) Date of publication of application: 25.09.2019
(73) Proprietor: Hamilton Sundstrand Corporation, Charlotte, NC 28217-4578 (US)
(72) Inventor: D'ORLANDO, Paul, Simsbury, CT 06070 (US); SURAWSKI, Eric, Hebron, CT 06248 (US)
(74) Representative: Dehns

(56) References cited:
- EP-A1- 3 279 092
- US-A- 3 847 298
- US-B2- 7 905 259

## Description

### BACKGROUND

Fuel tanks can contain potentially combustible combinations of oxygen, fuel vapors, and ignition sources. To prevent combustion in aircraft fuel tanks, commercial aviation regulations require actively managing the risk of explosion in fuel tank ullages. One type of inerting system uses a catalytic reactor to produce inert gas from hydrocarbon-air mixtures, and these systems often utilize a condenser to remove water from the inert gas before providing the gas to the fuel tank ullage. The condenser operates by cooling water vapor to form liquid water, which is drained from the condenser. The condenser requires a cooling air supply for this purpose. One source of condenser cooling air for current inerting systems includes air that is thermally regulated with a dedicated heat exchanger located in the ram air circuit. This location may, however, experience subfreezing temperatures and cause the liquid water within the condenser to freeze, thus disrupting the production of inert gas. Further, installation of additional componentry within the ram circuit can be challenging, and the heat exchanger may adversely affect performance of the environmental control system.

Reduced bleed environmental controls systems (or eco-ECS) rely on less engine bleed air to operate by supplementing with compressed air from other sources. Such systems, therefore, include additional airflow circuits, which can be tapped to provide air at a suitable temperature to the condenser, thus obviating the need for a dedicated ram air heat exchanger. Air flow systems are known from US 7,905,259.

### SUMMARY

An aircraft inert gas generating is provided as defined in claim 1.

An aircraft inert gas generating system is also provided as defined in claim 6.

A method of generating inert gas for use in an aircraft is provided as defined in claim 11.

### BRIEF DESCRIPTION OF THE DRAWINGS

FIG. 1 is a schematic illustration of an inerting system.
FIG. 2 is a schematic illustration of a cooling air source for a condenser of the inerting system.
FIG. 3 is a schematic illustration of an alternative cooling air source for the condenser of the inerting system.

### DETAILED DESCRIPTION

The present invention is directed to a catalytic inerting system for an aircraft, and more specifically, to a cooling air source for a condenser of the catalytic inerting system. The cooling air is extracted from an air flow circuit belonging to an eco-ECS system. The cooling air is extracted from a circuit location such that the cooling air falls within a temperature range that is cold enough to facilitate the condensation of water vapor within the catalytic inerting system, but not so cold as to freeze the water.

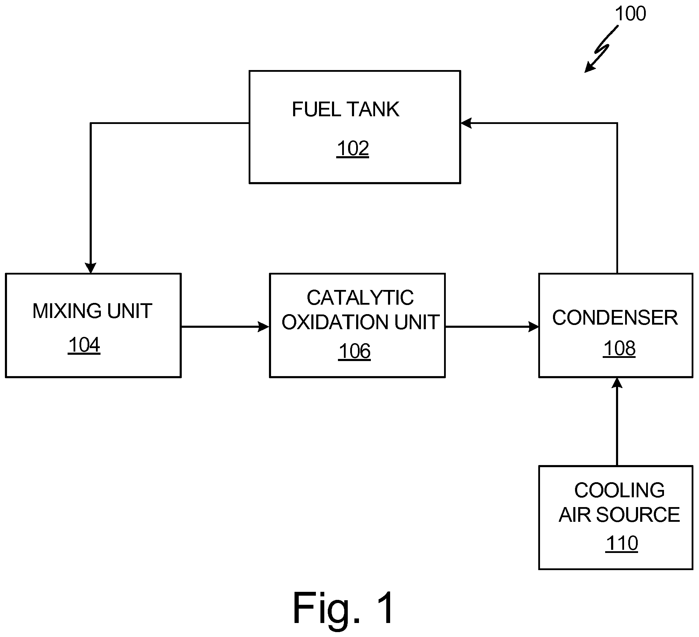

FIG. 1 is a schematic illustration of inerting system 100. Inerting system 100 includes fuel tank 102, mixing unit 104, catalytic oxidation unit 106, and condenser 108, which receives air from cooling air source 110. Fuel tank 102 is fluidly connected to mixing unit 104 such that an amount of hydrocarbon fuel from fuel tank 102 can be provided to mixing unit 104 and combined with an amount of oxygen rich air from an air source (not shown). Mixing unit 104 and catalytic oxidation unit 106 are fluidly connected such that the air-fuel mixture from mixing unit 104 can be provided to catalytic oxidation unit 106 and reacted with a catalyst to form a hot, gaseous reaction mixture containing, for example, nitrogen, carbon dioxide, and water vapor. Condenser 108 is fluidly connected to catalytic oxidation unit 106 such that it receives the gaseous reaction mixture and, using cooling air from cooling air source 110, cools the hot mixture, and further condenses and removes the water vapor, leaving behind an inert gas containing primarily carbon dioxide with some nitrogen. Condenser 108 is fluidly connected to fuel tank 102 such that the inert gas is provided to fuel tank 102 for ullage passivation. In other embodiments, the inert gas can additionally or alternatively be provided to another aircraft system requiring inert gas, such as a cargo hold fire suppression system (not shown). Also not shown in FIG. 1 are various other components, such as pumps, valves, and sensors, configured to control the movement of fluid throughout inerting system 100 that can be included in certain embodiments.

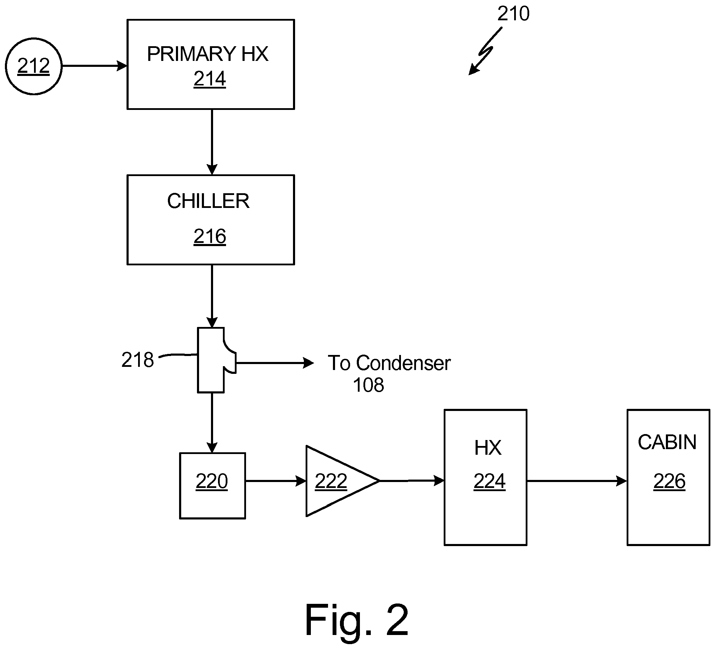

FIG. 2 is a schematic illustration of an embodiment of cooling air source 110 suitable for use with condenser 108. More specifically, cooling air source 210 is an air flow circuit configured to provide thermally regulated air to an aircraft cabin. Cooling air source 210 includes pressurized air source 212, which can be, for example, a source of engine bleed air or compressor air. The pressurized air entering the air flow circuit can have a temperature of roughly 232°C (450°F). Cooling air source 210 further includes primary heat exchanger 214, chiller 216, duct 218, water extractor 220, turbine 222, and condensing heat exchanger 224. In operation, pressurized air from source 212 flows first through primary heat exchanger 214, then 216, and exits chiller 216 at a significantly reduced temperature ranging from about 70°C-100°C (158-212°F). An amount of the cooled pressurized air can then be extracted by duct 218 positioned downstream of chiller 216. As can be seen in FIG. 2, the extracted air can be provided to condenser 108 of inerting system 100, and the stream of cooled air is suitable for removing water from the gaseous reaction mixture. In order to provide the cooled pressurized air to condenser 108, duct 218 is fluidly connected to condenser 108 either directly, or with various intervening components. Although described as a duct in the disclosed embodiment, duct 218 can be any suitable air extraction device such as a tap, port, valve, or flow line.

The remainder of the pressurized air continues through the circuit through water extractor 220 and turbine 222. The pressurized air drives turbine 222 which powers a compressor of an air cycle machine (not shown). The pressurized air then flows through heat exchanger 224, and can then be provided to aircraft cabin 226. In other embodiments, the pressurized air can be provided to any space requiring pressurized and thermally regulated air.

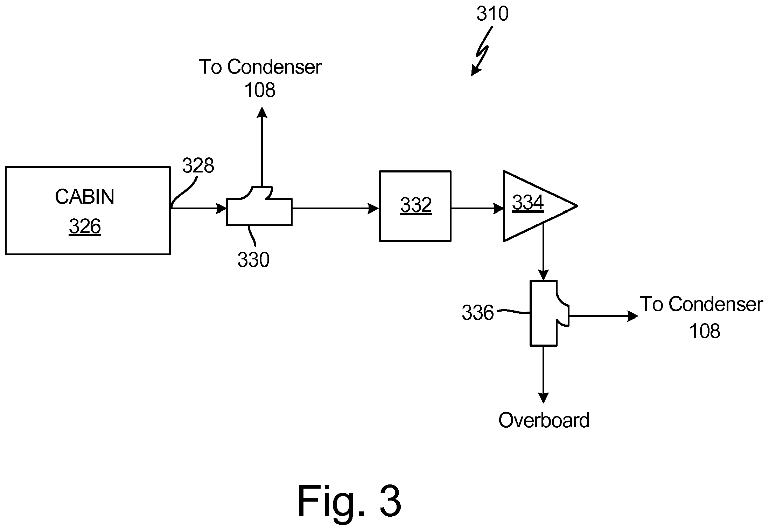

FIG. 3 is a schematic illustration of an alternative embodiment a cooling air source suitable for use with condenser 108. More specifically, cooling air source 310 is a cabin exhaust circuit that utilizes air that would otherwise be dumped overboard to power an air cycle machine. Cooling air source includes cabin 326 with outlet 328, first duct 330, heat exchanger 332, turbine 334, and second duct 336, which can be used as an alternative to first duct 330 in some embodiments. In operation, air is continually displaced from cabin 326 as "new" air (a combination of recycled cabin air and ECS air) flows in. The displaced air is exhausted from cabin 326 from outlet 328 which can be a vent, valve, or other suitable outlet. The exhaust air can have a temperature ranging from about 21°C-38°C (70-100°F). First duct 330 is positioned downstream of outlet 328 and is configured to extract an amount of cabin exhaust air, and further to provide the extracted exhaust air to condenser 108 of inerting system 108.

The remainder of the exhaust air continues to flow through the remainder of the circuit. The air flows through heat exchanger 332, then to turbine 334. The air drives turbine 334 which powers a compressor of an air cycle machine (not shown), and the air is further cooled by turbine 334. In embodiments without the upstream, first duct 330, the air can be extracted by second duct 336 and provided to condenser 108. The remainder of the air is dumped overboard. As was the case with duct 218 of FIG. 2, each of ducts 330 and 336 of the present embodiment can be directly connected, or connected through intervening components to condenser 108. Ducts 330 and 336 can further be one or a combination of taps, ports, valves, or flow lines in other embodiments.

The use of the disclosed cooling air sources in conjunction with a catalytic inerting system has many benefits. Each takes advantage of available cool air within existing eco-ECS air flow circuits, so no dedicated ram circuit heat exchanger is required. Further, the cooling air circuits can be fluidly connected to the catalytic inerting system with minimal additional componentry.

Those of skill in the art will appreciate that other configurations may be used without departing from the scope of the invention. For example, although described independently, cooling air sources 210 and 310 can be used in combination to provide cooling air to condenser 108. Such operation of cooling air sources 210 and 310 depends on, for example, flow volume through the circuits of sources 210 and 310 and inert gas requirement. Further, although there are valves and junctions illustratively shown at certain locations within the system(s), those of skill in the art will appreciate that these locations are merely for example only and other configurations may be used. Moreover, the order of components shown and described herein, in terms of the flow line and direction of air flow through the system may be changed without departing from the scope of the invention. For example, the location of the heat exchangers, turbines, ducts, etc. may be adjusted based on the specific systems and efficiencies therein.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. An aircraft inert gas generating system comprising:
a fuel source (102);
an air-fuel mixing unit (104) configured to receive an amount of the fuel and an amount of air and create an air-fuel mixture;
a catalytic oxidation unit (106) downstream of the air-fuel mixing unit and configured to receive and react the air-fuel mixture and generate a gaseous reaction mixture;
a condenser (108) downstream of and in flow communication with the catalytic oxidation unit and configured to receive the gaseous reaction mixture; and **characterized by**
a cabin exhaust circuit (110) in flow communication with the condenser and configured to provide cabin exhaust air at a first temperature below 100°F (38°C) to the condenser to cool and remove an amount of water vapor from the gaseous mixture.

2. The system of claim 1, wherein the temperature is below 80°F (27°C).

3. The system of claim 1 or 2, and further comprising: a duct (218) configured to supply an amount of the cabin exhaust air to the condenser.

4. The system of claim 3 and further comprising: a turbine (222) configured to power an air cycle machine compressor in response to a flow of the cabin exhaust air.

5. The system of claim 4, wherein the duct is positioned to extract cabin exhaust air at a location upstream of the turbine, or wherein the duct is positioned to extract cabin exhaust air at a location downstream of the turbine.

6. An aircraft inert gas generating system comprising:
a fuel source (102);
an air-fuel mixing unit (104) configured to receive an amount of the fuel and an amount of air and create an air-fuel mixture;
a catalytic oxidation unit (106) downstream of the air-fuel mixing unit and configured to receive and react the air-fuel mixture and generate a gaseous mixture;
a condenser (108) downstream of and in flow communication with the catalytic oxidation unit and configured to receive the gaseous reaction mixture; and
a pressurized air circuit (210) in flow communication with the condenser and configured to provide a stream of cooling air to the condenser to cool and remove an amount of water vapor from the gaseous mixture, **characterised in that** the pressurized air circuit comprises:
a source of pressurized air (212); and
a chiller (216) downstream of the source and configured to bring the pressurized air to a first temperature below 212°F (100°C).

7. The system of claim 6, wherein the first temperature is below 160°F (71 °C).

8. The system of claim 6or 7 and further comprising: a primary heat exchanger (214) upstream of the chiller.

9. The system of any of claims 6 to 8 and further comprising: a duct (218) downstream of the chiller and configured to supply an amount of the pressurized air at the first temperature to the condenser.

10. The system of any of claims 6 to 9, and further comprising: a turbine (222) downstream of the chiller and configured to power an air cycle machine compressor in response to a flow of the pressurized air.

11. A method of generating inert gas for use in an aircraft, the method comprising:
supplying an amount of fuel to an air-fuel mixing unit;
generating an air-fuel mixture within the mixing unit;
providing the mixture to a catalytic oxidation unit;
reacting the mixture in the catalytic oxidation unit to produce a gaseous mixture;
providing the gaseous mixture to a condenser
supplying a stream of cooling air at a first temperature below 212°F (100°C) to the condenser; and
reducing a temperature of the gaseous mixture and removing an amount of water vapor from the gaseous mixture using the condenser.

12. The method of claim 11, wherein the stream of cooling air is supplied from a fluid circuit within an unpressurized space within the aircraft.

13. The method of claim 12, wherein a duct connects the fluid circuit with the condenser.

14. The method of claim 12 or 13, wherein the fluid circuit is a pressurized air circuit comprising:
a source of pressurized air; and
a chiller downstream of and in flow communication with the source.

## Patentansprüche

1. Luftfahrzeug-Inertgas-Erzeugungssystem, das Folgendes umfasst:
eine Brennstoffquelle (102);
eine Luft-Brennstoff-Mischeinheit (104), die dazu konfiguriert ist, eine Brennstoffmenge und eine Luftmenge zu erhalten und ein Luft-Brennstoff-Gemisch herzustellen;
eine katalytische Oxidationseinheit (106), die stromabwärts von der Luft-Brennstoff-Mischeinheit gelegen und dazu konfiguriert ist, das Luft-Brennstoff-Gemisch zu erhalten und zu reagieren und ein Gasreaktionsgemisch zu erzeugen;
einen Kondensator (108), der stromabwärts von der katalytischen Oxidationseinheit gelegen ist, in Strömungskommunikation mit dieser steht und dazu konfiguriert ist, das Gasreaktionsgemisch zu erhalten; und
**dadurch gekennzeichnet, dass**
ein Kabinenablaufkreislauf (110) in Strömungskommunikation mit dem Kondensator steht und dazu konfiguriert ist, dem Kondensator Kabinenabluft bei einer ersten Temperatur unter 100 °F (38 °C) bereitzustellen, um eine Wasserdampfmenge zu kühlen und von dem Gasgemisch zu entfernen.

2. System nach Anspruch 1, wobei die Temperatur unter 80 °F (27 °C) liegt.

3. System nach Anspruch 1 oder 2, das ferner Folgendes umfasst: eine Rohrleitung (218), die dazu konfiguriert ist, dem Kondensator eine Kabinenabluftmenge breitzustellen.

4. System nach Anspruch 3, das ferner Folgendes umfasst: eine Turbine (222), die dazu konfiguriert ist, einen Luftzyklusmaschinenkompressor als Antwort auf eine Strömung der Kabinenabluft anzutreiben.

5. System nach Anspruch 4, wobei die Rohrleitung positioniert ist, um Kabinenabluft an einem Ort abzusaugen, der stromaufwärts von der Turbine gelegen ist, oder wobei die Rohrleitung positioniert ist, um Kabinenabluft an einem Ort abzusaugen, der stromabwärts von der Turbine gelegen ist.

6. Luftfahrzeug-Inertgas-Erzeugungssystem, das Folgendes umfasst:
eine Brennstoffquelle (102);
eine Luft-Brennstoff-Mischeinheit (104), die dazu konfiguriert ist, eine Brennstoffmenge und eine Luftmenge zu erhalten und ein Luft-Brennstoff-Gemisch herzustellen;
eine katalytische Oxidationseinheit (106), die stromabwärts von der Luft-Brennstoff-Mischeinheit gelegen und dazu konfiguriert ist, das Luft-Brennstoff-Gemisch zu erhalten und zu reagieren und ein Gasgemisch zu erzeugen;
einen Kondensator (108), der stromabwärts von der katalytischen Oxidationseinheit gelegen ist, in Strömungskommunikation mit dieser steht und dazu konfiguriert ist, das Gasreaktionsgemisch zu erhalten; und
ein Druckluftkreislauf (210), der in Strömungskommunikation mit dem Kondensator steht und dazu konfiguriert ist, dem Kondensator einen Kühlluftstrom bereitzustellen, um eine Wasserdampfmenge zu kühlen und von dem Gasgemisch zu entfernen, **dadurch gekennzeichnet, dass** der Druckluftkreislauf Folgendes umfasst:
eine Druckluftquelle (212); und
einen Kühler (216), der stromabwärts von der Quelle gelegen und
dazu konfiguriert ist, die Druckluft auf eine erste Temperatur unter 212 °F (100 °C) zu bringen.

7. System nach Anspruch 6, wobei die erste Temperatur unter 160 °F (71 °C) liegt.

8. System nach Anspruch 6 oder 7, das ferner Folgendes umfasst: einen primären Wärmetauscher (214), der stromaufwärts von dem Kühler gelegen ist.

9. System nach einem der Ansprüche 6 bis 8, das ferner Folgendes umfasst: eine Rohrleitung (218), die stromabwärts von dem Kühler gelegen und dazu konfiguriert ist, dem Kondensator eine Druckluftmenge bei der ersten Temperatur zuzuführen.

10. System nach einem der Ansprüche 6 bis 9, das ferner Folgendes umfasst: eine Turbine (222), die stromabwärts von dem Kühler gelegen und dazu konfiguriert ist, einen Luftzyklusmaschinenkompressor als Antwort auf eine Druckluftströmung anzutreiben.

11. Verfahren zum Erzeugen von Inertgas zur Verwendung in einem Luftfahrzeug, wobei das Verfahren Folgendes umfasst:
Zuführen einer Brennstoffmenge an eine Luft-Brennstoff-Mischeinheit;
Erzeugen eines Luft-Brennstoff-Gemisches innerhalb der Mischeinheit;
Bereitstellen des Gemisches für eine katalytische Oxidationseinheit;
Reagieren des Gemisches in der katalytischen Oxidationseinheit, um ein Gasgemisch zu produzieren,
Bereitstellen des Gasgemisches für einen Kondensator Zuführen eines Kühlluftstroms bei einer ersten Temperatur unter 212 °F (100 °C) an den Kondensator; und
Verringern einer Temperatur des Gasgemisches und Entfernen einer Wasserdampfmenge von dem Gasgemisch unter Verwendung des Kondensators.

12. Verfahren nach Anspruch 11, wobei der Kühlluftstrom von einem Fluidkreislauf innerhalb eines drucklosen Raums innerhalb des Luftfahrzeugs zugeführt ist.

13. Verfahren nach Anspruch 12, wobei eine Rohrleitung den Fluidkreislauf mit dem Kondensator verbindet.

14. Verfahren nach Anspruch 12 oder 13, wobei der Fluidkreislauf ein Druckluftkreislauf ist, der Folgendes umfasst:
eine Druckluftquelle; und
einen Kühler, der stromabwärts von der Quelle gelegen ist und
in Strömungskommunikation mit dieser steht.

## Revendications

1. Système de génération de gaz inerte d'aéronef comprenant :
une source de carburant (102) ;
une unité de mélange air-carburant (104) configurée pour recevoir une quantité du carburant et une quantité d'air et créer un mélange air-carburant ;
une unité d'oxydation catalytique (106) en aval de l'unité de mélange air-carburant et configurée pour recevoir et faire réagir le mélange air-carburant et générer un mélange réactionnel gazeux ;
un condenseur (108) en aval et en communication d'écoulement avec l'unité d'oxydation catalytique et configuré pour recevoir le mélange réactionnel gazeux ; et
**caractérisé par**
un circuit d'échappement de cabine (110) en communication d'écoulement avec le condenseur et configuré pour fournir de l'air d'échappement de cabine à une première température inférieure à 100 °F (38 °C) au condenseur pour refroidir et éliminer une quantité de vapeur d'eau du mélange gazeux.

2. Système selon la revendication 1, dans lequel la température est inférieure à 80 °F (27 °C).

3. Système selon la revendication 1 ou 2, et comprenant en outre : un conduit (218) configuré pour fournir une quantité de l'air d'échappement de cabine au condenseur.

4. Système selon la revendication 3 et comprenant en outre : une turbine (222) configurée pour alimenter un compresseur de groupe turbo-refroidisseur en réponse à un écoulement de l'air d'échappement de cabine.

5. Système selon la revendication 4, dans lequel le conduit est positionné pour extraire l'air d'échappement de cabine au niveau d'un emplacement en amont de la turbine, ou dans lequel le conduit est positionné pour extraire l'air d'échappement de cabine au niveau d'un emplacement en aval de la turbine.

6. Système de génération de gaz inerte d'aéronef comprenant :
une source de carburant (102) ;
une unité de mélange air-carburant (104) configurée pour recevoir une quantité du carburant et une quantité d'air et
créer un mélange air-carburant ;
une unité d'oxydation catalytique (106) en aval de l'unité de mélange air-carburant et configurée pour recevoir et faire réagir le mélange air-carburant et générer un mélange gazeux ;
un condenseur (108) en aval et en communication d'écoulement avec l'unité d'oxydation catalytique et configuré pour recevoir le mélange réactionnel gazeux ; et
un circuit d'air comprimé (210) en communication d'écoulement avec le condenseur et configuré pour fournir un courant d'air de refroidissement au condenseur afin de refroidir et d'éliminer une quantité de vapeur d'eau du mélange gazeux, **caractérisé en ce que** le circuit d'air comprimé comprend :
une source d'air comprimé (212) ; et
un refroidisseur (216) en aval de la source et configuré pour amener l'air comprimé à une première température inférieure à 212 °F (100 °C).

7. Système selon la revendication 6, dans lequel la première température est inférieure à 160 °F (71 °C).

8. Système selon la revendication 6 ou 7 et comprenant en outre : un échangeur de chaleur primaire (214) en amont du refroidisseur.

9. Système selon l'une quelconque des revendications 6 à 8 et comprenant en outre : un conduit (218) en aval du refroidisseur et configuré pour fournir une quantité de l'air comprimé à la première température au condenseur.

10. Système selon l'une quelconque des revendications 6 à 9, et comprenant en outre : une turbine (222) en aval du refroidisseur et configurée pour alimenter un compresseur de groupe turbo-refroidisseur en réponse à un écoulement de l'air comprimé.

11. Procédé de génération de gaz inerte destiné à être utilisé dans un aéronef, le procédé comprenant :
la fourniture d'une quantité de carburant à une unité de mélange air-carburant ;
la génération d'un mélange air-carburant à l'intérieur de l'unité de mélange ;
la fourniture du mélange à une unité d'oxydation catalytique ;
la mise en réaction du mélange dans l'unité d'oxydation catalytique pour produire un mélange gazeux ;
la fourniture du mélange gazeux à un condenseur la fourniture d'un courant d'air de refroidissement à une première température inférieure à 212 °F (100 °C) au condenseur ; et
la réduction d'une température du mélange gazeux et l'élimination d'une quantité de vapeur d'eau du mélange gazeux à l'aide du condenseur.

12. Procédé selon la revendication 11, dans lequel le courant d'air de refroidissement est fourni depuis un circuit de fluide à l'intérieur d'un espace sans pression à l'intérieur de l'aéronef.

13. Procédé selon la revendication 12, dans lequel un conduit relie le circuit de fluide au condenseur.

14. Procédé selon la revendication 12 ou 13, dans lequel le circuit de fluide est un circuit d'air comprimé comprenant :
une source d'air comprimé ; et
un refroidisseur en aval et en communication d'écoulement avec la source.
